# EUROPEAN PATENT SPECIFICATION

(11) **EP 1 954 123 B1**
(45) Date of publication and mention of the grant of the patent: **28.05.2014**
(21) Application number: 06808595.0
(22) Date of filing: 17.11.2006
(51) Int. Cl.: A01M 1/24, A01M 13/00

(54) **Building protection apparatus and method**
Gebäudeschutzvorrichtung und -method
Appareil et méthode de protection de batiment

(30) Priority: 22.11.2005 GB 0523720; 26.04.2006 GB 0608196
(43) Date of publication of application: 13.08.2008
(73) Proprietor: Prestige Air-Technology Limited, Ashford TN25 4BL (GB)
(72) Inventor: NICHOLS, Paul, Ian, Falmouth TR11 5RP (GB)
(74) Representative: Greenwood, Matthew David
(86) International application number: PCT/GB2006/004309
(87) International publication number: WO 2007/060399

(56) References cited:
- WO-A-2005/046743
- JP-A- 11 036 470
- JP-A- 2003 010 732
- JP-A- 2005 221 131
- US-A1- 2004 067 178
- US-A1- 2005 220 662

## Description

The present invention relates generally to apparatus for protecting the lower regions of and structure of a building, more particularly, to apparatus for use against organic entities constituting pests or other nuisances in subterranean regions below buildings.

Existing pest control methods differ for new build and retrofit installations. For example, currently, in new build installations control is achieved by use of a passive barrier. Conversely, in retrofit installations the common control method involves the use of chemical treatment. Failure of performance may occur in both of these common methods currently used.

In the case of a passive barrier, for example of the type disclosed in US5417017, even a very small failure can effectively have the same result as having no barrier at all, since some subterranean degradation factors are able to pass through very small openings. Consequently, 100% performance of a control method of this type is difficult to achieve for a new build housing installation. An additional problem with this method of pest control is that damage may occur during work undertaken subsequent to the installation. Further, later alterations may also damage the integrity of an existing well-fitted barrier.

The treatment of existing buildings generally relies upon the delivery of a chemical barrier and/or pesticide to the total area of the underside of a building, where access is difficult. Consequently the effectiveness of this method is reliant upon the operative's efficiency. It is therefore unlikely that 100% coverage will be achieved on every treatment. Moreover, a further treatment is required periodically, for example every three months, which is a labour intensive as well as a costly procedure.

Document JP 11 036470 A discloses an apparatus for protecting a building from damage or degradation by a target subterranean degradation factor according to the preamble of claim 1.

The performance of the delivery system therefore is the key to achieving effective control of subterranean degradation factors, such as subterranean organic entities constituting pests or other nuisances. Accordingly, it is desirable to provide apparatus and methods of using it which address the aforementioned difficulties.

According to the present invention, there is provided apparatus for use in protecting a building from damage or degradation by a target subterranean degradation factor, comprising as specified in claim 1, and a corresponding building protection method according to claim 9. Preferred embodiments are set out in the dependent claims.

High moisture content in the region below a building can cause serious problems for wooden structures and supports. One of the major problems caused is the attraction of insects or other such subterranean degradation factors to such environments. For example a high moisture content in an environment can encourage the establishment of colonies of insects, such as termites, or support the growth of other subterranean degradation factors, such as fungi for example. In this way, wood in a structure may be caused to deteriorate due to attack by degradation factors and will therefore decay if there is a high moisture content in the surrounding atmosphere. The present invention is able to provide a hostile environment to a subterranean degradation factor, such as termites, by various methods including removing moisture from the air and avoiding still air conditions.

The target subterranean degradation factor is an insect, such as a termite for example.

The means for creating a region with properties inhospitable to the target subterranean degradation factor comprise means for delivering ozone at least in sufficient concentration to affect the reproductive or communicative behaviour of said termites or other insects.

In some embodiments, the means for creating a region with properties inhospitable to the target subterranean degradation factor may comprise or include means for delivering means for delivering ozone at least in sufficient concentration to modify the pheromone chemistry of the said termites or other insects.

The means for creating a hostile region in the ground below the building may comprise or include means for irradiating the said region with ultrasonic waves. In this way the delivery of means for creating a hostile environment are made more efficient because such a medium can be delivered without the use of extensive excavation equipment.

The apparatus comprises means for generating a superatmospheric pressure field in the ground region below the building. A positive pressure field in this region will help to ensure that the subterranean degradation factors are repelled from this field and therefore are discouraged from approaching the building.

The means for creating a superatmospheric pressure field may comprise a pump located within the building. Such a pump may provide sufficient pressure to create a superatmospheric pressure field in the region below the building.

The pump may be located within a habitable region of the building and may act to create forced ventilation thereof. By pumping air from the habitable region of the building to a region below the building, this creates a pressure differential between the two regions. The resultant sub-atmospheric pressure field created in the habitable region of the building encourages an inward movement of air from the exterior of the building thereby naturally ventilating the interior of the building. Further, because the pump is located within a habitable region of the building, access to the pump is made easier for the purpose of any repair and maintenance work that may be required.

The apparatus may further comprise detecting means for monitoring the migration rate of the subterranean degradation factor as it approaches the building from within the ground region below the building. The detecting means may be capable of communication with the means for delivery of the treatment agent into the region below the building, to allow the treatment agent to be delivered when required in response to the migration rate of the subterranean degradation factor. In this way, the amount of treatment agent required for delivery to the region below the building can be minimised to the required amount. Accordingly, the treatment agent would only be delivered when a subterranean degradation factor is detected as approaching the superatmospheric pressure field in the region below the building. Operating costs and reagent costs are therefore reduced.

The apparatus may further comprise additional components to alter the form and/or potency of the treatment agent to be delivered. This may include for example means for ionising air or for generating oxides of nitrogen. Accordingly, the apparatus comprising the aforementioned means may act to ionise the air which passes through the apparatus. Further, the aforementioned means may also act to generate ozone and/or generate oxides of nitrogen from the air that passes through the apparatus. The generation of ozone may occur on site or *in situ*. The apparatus may further comprise means for storing and delivering ozone to the region below a building, whereby to produce an environment inhospitable to subterranean degradation factors such as termites or other insects, for example.

The method according to claim 9 may further comprise the step of detecting the migration and/or growth rate of the target subterranean degradation factor located below the building and in response using this information to regulate the inhibition of growth and/or presence of the target subterranean degradation factor.

The treatment agent is delivered at temporally spaced intervals. In this way the present invention may also be used as a backup insurance to a permanent passive barrier. The present invention may therefore remain in a dormant state until such a passive barrier has been breached. Accordingly, the treatment agent may then be delivered to the subterranean regions in the required amounts. The required amount may change over time depending on the presence or growth of the target subterranean degradation factors and therefore the temporally spaced intervals of the treatment agent delivery may also be varied to accommodate this change.

The delivery of the treatment agent may be randomly altered in terms of the concentration of the treatment agent or the length of the temporally spaced intervals, for example. In this way, the target subterranean degradation factors are less likely to become resistant or tolerant to the arrangement of the irregular delivery of treatment agent, whether this be the concentration or the temporal intervals between the treatment agent applications.

A pheromone is a volatile hormone or behaviour-modifying agent. Ozone is a known, strongly oxidising agent. Accordingly, it is believed that ozone may be used to modify the function of a pheromone, such that the communication between target subterranean organic entities constituting pests or other nuisances, such as termites for example, is adversely affected. This may, for example, have a disorientating effect on the target subterranean organic entities constituting pests or other nuisances.

Accordingly, ozone may have an alternative use for affecting the reproductive or communicative behaviour, and/or modifying the pheromone chemistry of insects, such as termites.

Apparatus formed according to the present invention may comprise means for generating ozone *in situ* or on site, which may then be conveyed to the required regions. A method of producing ozone on site may include for example, reacting hydrocarbons with nitrogen oxides, particularly nitrogen dioxide, in the presence of sunlight or other source of ultra-violet light. This method is similar to the natural creation of ground level ozone. Other methods of generating ozone on site may include electrostatic or corona discharge techniques.

According to the present invention air comprising ozone is injected into a region below a building infested with subterranean organic entities constituting pests or other nuisances, such as termites or other insects. The ozone has the effect of creating an uncomfortable and hostile environment for the termites or other insects, and further is able to modify the pheromone chemistry thereof, thereby inhibiting the communication between the termites or other insects, which has the effect of disorientating them. Accordingly, such termites or other insects may either be reduced in numbers by evacuation or termination, or may simply be discouraged from approaching the building.

Insects, such as termites, feed on wood or other sources of cellulose. Although they lack specific cellulases for breaking down cellulose they are still able to digest it because of symbiotic relationships with flagellate protozoa, bacteria and fungi. For example, some protozoa digest wood particles by hydrolysing cellulose anaerobically, which produces glucose that can be absorbed by an insect, such as a termite.

The cellulose which insects, such as termites, attack is broken down to carbon dioxide and water, causing timber to lose strength. The resultant increase in concentration of carbon dioxide during digestion of wood by termites, for example, provides an attractant scent indicating the presence of food for other termites. It is thought that the presence of ozone may reduce or eliminate the carbon dioxide residing in the environment of the termite or other insects, thereby affecting the pheromone chemistry of the termites or other insects. The ozone may provide an energised oxygen-rich atmosphere which may be inhospitable to termites or other insects.

To ensure that the ozone concentration does not have adverse effects on human health if the ozone were to escape from subterranean region below the building into the building itself, the concentration of the ozone in the air to be injected is In preferably less than 0.1ppm (parts per million). In houses under construction, it may be advantageous to inject a low ozone concentration (lower than 0.1ppm) continuously, for a preventative effect.

Various embodiments of the present invention will now be more particularly described, by way of example, with reference to the accompanying drawings, in which:
Figure 1 is a cross section of a building to which an embodiment of the present invention has been applied;
Figure 2a is an enlarged view of the pump unit of Figure 1 shown with the control valve in a closed position;
Figure 2b is an enlarged view of the pump unit of Figure 1 shown with the control valve in an open position;
Figure 3 is a section on an enlarged scale through the foundation layer of the building of Figure 1; and
Figure 4 is a flow chart showing the major steps in protecting a building from a subterranean degradation factor by method not according to the present invention.

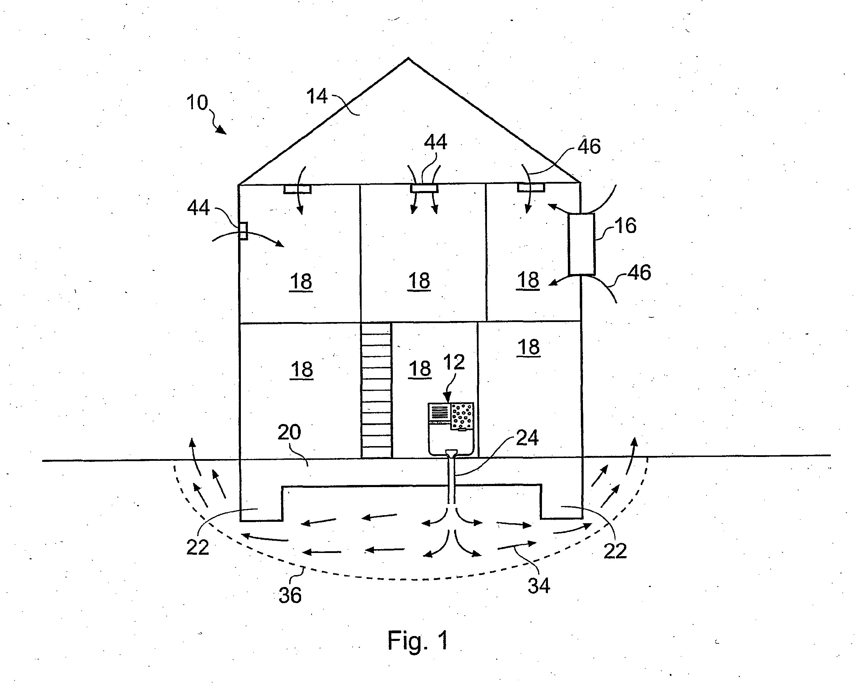

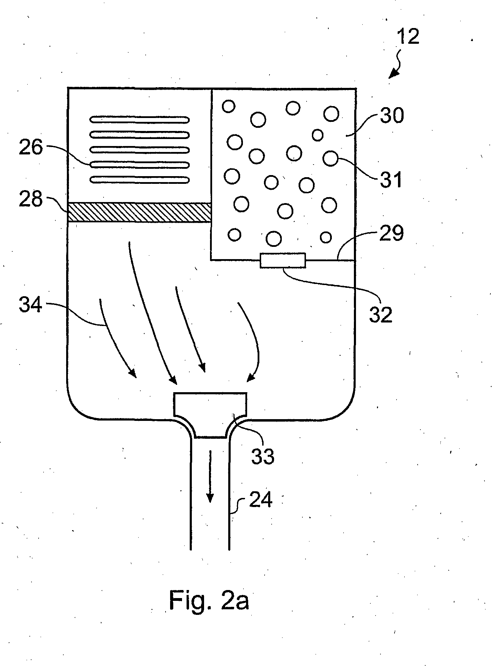

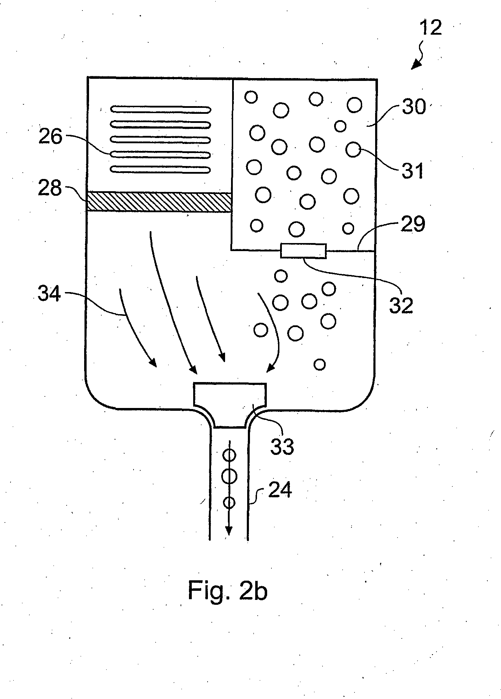

Referring first to Figure 1, there is shown a section of a building, generally indicated 10. The building 10 comprises a loft region 14, a window 16, habitable rooms 18, a foundation layer 20, footings 22, a pump unit 12, and diffusion means (here depicted as a conduit 24). The pump unit 12 is located within a habitable room 18 and is shown in more detail in Figures 2a and 2b.

With reference to Figure 2a, there is shown an enlarged view of the pump unit, generally indicated 12, of Figure 1. The pump unit 12 has air intake openings 26, an air filter 28, a reservoir 30 of a chemical agent vapour 31 which comprises ozone in this example, and a control valve 32. Obviously, other types of closure valve may be employed in other embodiments. The pump unit 12 also has a primary mover 33 which, in use, draws air from within a habitable room 18 of the building 10 via the air intake openings 26. The pump unit 12 is provided with an air filter 28 to remove any dust particles or other impurities that may be contained within the air. Following this, the clean air moves in a direction indicated by the pump air stream arrows 34 towards the conduit 24, which is connected at the outlet of the pump unit 12. The control valve 32 is located within a wall 29 of the reservoir 30.

The amount of chemical agent vapour 31 to be delivered to the subterranean ground region below the building 10 can be varied by controlling the opening of the control valve 32. Figure 2a illustrates the control valve 32 in a fully closed position, thereby preventing any chemical agent vapour 31 from mixing with and being conveyed by the air stream 34. Consequently, in this configuration the pump air stream 34 will not contain chemical agent vapour 31 and therefore only air will be delivered to the subterranean regions below the building 10.

Figure 2b illustrates the pump unit 12 of Figure 1, wherein the control valve 32 is in an open position. When in this configuration the chemical agent vapour 31 is free to mix with and be conveyed by the pump air stream 34 towards the adjoining conduit 24. In this way an air/chemical agent vapour mix (hereinafter referred to as vapour mix) can be delivered to the subterranean regions below the building 10. The amount of chemical agent vapour 31 to be delivered to the subterranean region below the building 10 can therefore be varied by adjusting the control valve 32 between the closed and open configurations shown in Figures 2a and 2b, respectively.

Referring back to Figure 1, the conduit 24 connects the outlet from the pump unit 12 into the subterranean region below the building 10. The conduit 24 passes through the foundation layer 20 to enable delivery of the vapour mix to the subterranean region below the building 10. The vapour mix diffuses into the subterranean region below the building 10 and moves in a direction indicated by the arrows 34. This movement is in a downward and lateral direction from the ground region between the footings 22 of the building 10, to an eventual upward direction towards and through the ground layer located on the extremities of the building 10. In this way the vapour mix will eventually diffuse into the external atmosphere. The vapour mix is forced into the ground region under pressure by the pump unit 12, thereby creating an invisible barrier 36 which acts to inhibit the presence of and growth of subterranean degradation factors in order to protect the building 10.

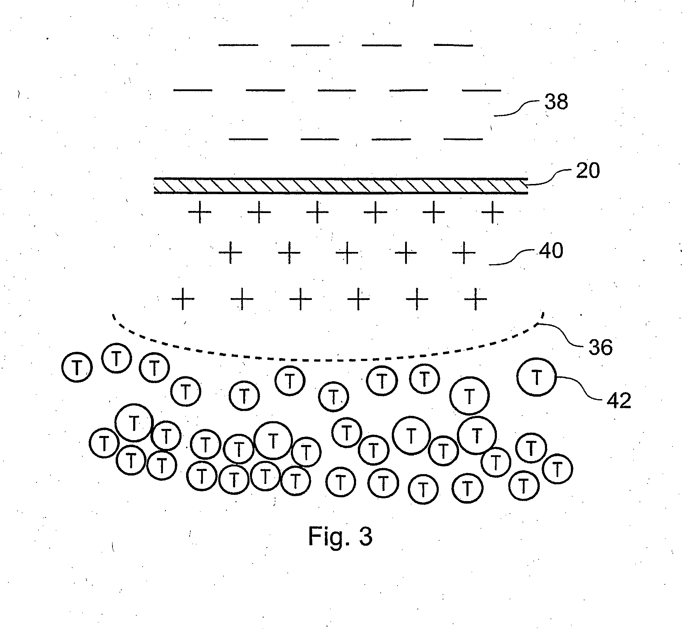

With reference to Figure 3, there is illustrated a representation of the respective regions above and below the foundation layer 20. The pump unit 12 pumps air from within the habitable rooms 18 of the building 10 into the ground region below the building 10. Accordingly, the relative pressures in these respective regions are indicated, in that the region above the foundation layer 20 has a sub-atmospheric pressure 38, whereas the region below the foundation layer 20 has a superatmposheric pressure 40. This relative pressure differential ensures that a positive pressure field is maintained in the ground region below the building 10, thereby maintaining a continuous flow of vapour mix within this region. This pressure differential and airflow has the effect of removing moisture from this region by ventilation thereof and also acts to avoid still air. Consequently, unnatural subsoil conditions are generated thereby creating an invisible barrier in which subterranean degradation factors, here shown as termites 42, are discouraged from entering. Accordingly, the concentration of termites 42 decreases as the invisible barrier 36 is approached and in this way the building 10 can be protected from the termites 42.

Referring back to Figure 1, there is also illustrated a secondary function of the present invention. The building 10 is also provided with external air intake grilles 44, through which external air surrounding the building 10 is drawn into the building. The external air intake grilles 44 are located on both the exterior side wall of the building 10 and on the ceilings of the habitable rooms 18 adjacent to the loft 14. The secondary function of the present invention takes effect in conjunction with the primary function of the present invention, in that in use when internal air is drawn in by the pump unit 12 to be delivered to the subterranean region below the building 10, external air is simultaneously drawn in from the external regions surrounding the building 10 and also the loft 14 of the building 10, the external air intake flow being indicated by arrows 46. This forced ventilation of the internal regions of the building 10 is caused by the sub-atmospheric pressure created by action of the pump unit 12. Accordingly, this induced pressure differential between the internal regions of the building 10 and the external regions of the building 10 causes external air to be drawn in via the external air intake grilles 44 and the peripheral regions of the window 16.

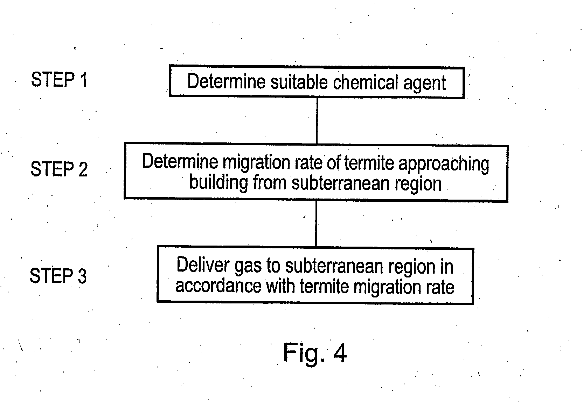

Figure 4 is a flow chart showing the principal steps in protecting a building from subterranean degradation factors, in this example, termites. The first step comprises determination of the chemical agent most suited to inhibit the presence of the termites. This determination may be made by conduction of laboratory testing in order to compare the potency of different chemical agents on termites. The second step is the determination of the migration rate of termites approaching a building from a subterranean region. This rate may be determined by use of sensors positioned in preset locations, which are able to monitor the progress of termites as they approach the building or an invisible barrier. The third step involves the use of a pump unit to deliver air/chemical agent vapour mix to the subterranean regions below the building, thereby creating a superatmospheric pressure in this region. The delivery of the vapour mix will be made in accordance with the previously determined migration rate of the termites. Because the delivery of the vapour mix is made only when the sensors detect that the migration rate of the termites approaching the building is above a preset threshold, then the amount of vapour mix used is also decreased. Accordingly, the operating costs of the present invention are also reduced thereby improving the overall efficiency.

## Claims

1. Apparatus for use in protecting a building (10) from damage or degradation by a target subterranean degradation factor (42), comprising means (12) for creating a superatmospheric pressure field (40) in a region in the ground below the building having properties hostile to the target subterranean degradation factor by delivering ozone (31) at least in sufficient concentration to affect the reproductive or communicative behaviour of the target subterranean degradation factor (42), wherein the target subterranean degradation factor (42) consists of termites or other insects (42), **characterised in that** the ozone (31) is delivered at temporally spaced intervals over an extended period, and wherein the concentration is less than that at which its presence would cause detrimental effects on humans.

2. Apparatus as claimed in Claim 1, wherein the means (12) for creating a region with properties inhospitable to the target subterranean degradation factor (42) comprise or include means for delivering ozone (31) at least in sufficient concentration to modify the pheromone chemistry of the said termites or other insects.

3. Apparatus as claimed in any preceding claim, wherein the means for creating a hostile region in the ground below the building comprise or include means for irradiating the said region with ultrasonic waves.

4. Apparatus as claimed in any preceding Claim, wherein the means (12) for creating a superatmospheric pressure field comprises a pump (12) located within the building.

5. Apparatus as claimed in Claim 4, wherein the said pump (12) is located within a habitable region (18) of the building (10) and acts to create forced ventilation (46) thereof.

6. Apparatus as claimed in any preceding claim, further comprising detecting means for monitoring the migration rate of said subterranean degradation factor (42) as it approaches the said building (10) from within the ground region below the building.

7. Apparatus as claimed in Claim 6, wherein the detecting means are capable of communication with said means (12) for delivery of the ozone (31) into the region below the building (10), to allow the ozone to be delivered when required, in response to the migration rate of said subterranean degradation factor (42).

8. Apparatus as claimed in any preceding claim, further comprising means for ionising air.

9. A method of protecting a building (10) from damage or degradation by a target subterranean degradation factor (42) such as an insect; the said method comprising the steps of: creating a superatmospheric pressure field (40) in a region below the building; and delivering a treatment agent (31) at temporally spaced intervals over an extended period to the said region, the said treatment agent tending to inhibit the growth and/or presence of the said target subterranean degradation factor, wherein the treatment agent is ozone (31) and its concentration is less than that at which its presence would cause detrimental effects on humans.

10. A method as claimed in Claim 9, further comprising the step of detecting the migration/growth rate of said target subterranean degradation factor (42) located below said building (10) and in response using this information to regulate the inhibition of growth and/or presence of the said target subterranean degradation factor.

11. A method as claimed in Claim 9 or 10, wherein the length of the temporally spaced intervals are altered irregularly.

12. A method as claimed in any of Claims 9 to 11, wherein the ozone concentration is less than 0.1ppm.

13. A method as claimed in any of Claims 9 to 12, wherein the concentration of the treatment agent (31) is altered irregularly.

14. A method as claimed in any of claims 9 to 13, wherein the said ozone is present at least in sufficient concentration to affect the reproductive or communicative behaviour of the target subterranean degradation factor whereby to result in at least depletion of the population thereof.

## Patentansprüche

1. Vorrichtung zur Verwendung beim Schützen eines Gebäudes (10) gegen Schaden oder Verschlechterung durch einen unterirdischen Ziel-Degradationsfaktor (42), aufweisend eine Einrichtung (12) zur Erzeugung eines atmosphärischen Überdruckfelds (40) in einem Bereich im Boden unter dem Gebäude, der dem unterirdischen Ziel-Degradationsfaktor feindliche Eigenschaften aufweist durch Zuführung von Ozon (31) in wenigstens einer zum Beeinflussen des reproduktiven oder kommunikativen Verhaltens des unterirdischen Ziel-Degradationsfaktors (42) ausreichenden Konzentration aufweist, wobei der unterirdische Ziel-Degradationsfaktor (42) aus Termiten oder anderen Insekten (42) besteht, **dadurch gekennzeichnet, dass** das Ozon (31) in zeitlich beabstandeten Intervallen über einer längeren Periode zugeführt wird, und wobei die Konzentration kleiner ist als die, bei der das Vorhandensein des Ozons schädliche Wirkungen bei Menschen verursachen würde.

2. Vorrichtung nach Anspruch 1, wobei die Einrichtung (12) zur Erzeugung eines Bereichs mit für den unterirdischen Ziel-Degradationsfaktor (42) unwirtlichen Eigenschaften eine Einrichtung zur Zuführung von Ozon (31) in wenigstens einer zum Modifizieren der Pheromonchemie der Termiten oder anderen Insekten ausreichenden Konzentration aufweist oder umfasst.

3. Vorrichtung nach einem der vorhergehenden Ansprüche, wobei die Einrichtung zur Erzeugung eines feindlichen Bereichs im Boden unter dem Gebäude eine Einrichtung zur Bestrahlung des Bereichs mit Ultraschallwellen aufweist oder umfasst.

4. Vorrichtung nach einem der vorhergehenden Ansprüche, wobei die Einrichtung (12) zur Erzeugung eines atmosphärischen Überdruckfelds eine sich im Gebäude befindende Pumpe (12) aufweist.

5. Vorrichtung nach Anspruch 4, wobei die Pumpe (12) sich in einem bewohnbaren Bereich (18) des Gebäudes (10) befindet und zum Erzeugen einer erzwungenen Belüftung (46) desselben wirkt.

6. Vorrichtung nach einem der vorhergehenden Ansprüche, außerdem aufweisend eine Detektierungseinrichtung zur Überwachung der Migrationsrate des unterirdischen Ziel-Degradationsfaktors (42), wenn er sich dem Gebäude (10) aus dem Inneren des Bodenbereichs unter dem Gebäude nähert.

7. Vorrichtung nach Anspruch 6, wobei die Detektierungseinrichtung fähig ist zur Kommunikation mit der Einrichtung (12) zur Zuführung des Ozons (31) in den Bereich unter dem Gebäude (10), um dem Ozon zu ermöglichen, in Reaktion auf die Migrationsrate des unterirdischen Ziel-Degradationsfaktors (42) erforderlichenfalls zugeführt zu werden.

8. Vorrichtung nach einem der vorhergehenden Ansprüche, außerdem aufweisend eine Einrichtung zur Ionisierung von Luft.

9. Verfahren zum Schützen eines Gebäudes (10) gegen Beschädigung oder Verschlechterung durch einen unterirdischen Ziel-Degradationsfaktor (42) wie beispielsweise ein Insekt, wobei das Verfahren die Schritte aufweist: Erzeugen eines atmosphärischen Überdruckfelds (40) in einem Bereich unter dem Gebäude und Zuführen eines Behandlungsmittels (31) in zeitlich beabstandeten Intervallen über einer längeren Periode zu dem Bereich, wobei das Behandlungsmittel dazu tendiert, das Wachstum und/oder Vorhandensein des unterirdischen Ziel-Degradationsfaktors zu hemmen, wobei das Behandlungsmittel Ozon (31) ist und die Konzentration kleiner ist als die, bei der das Vorhandensein des Ozons schädliche Wirkungen bei Menschen verursachen würde.

10. Verfahren nach Anspruch 9, außerdem aufweisend den Schritt zum Detektieren der Migrations-/Wachstumsrate des sich unter dem Gebäude (10) befindenden unterirdischen Ziel-Degradationsfaktors (42) und in Reaktion darauf Benutzen dieser Information zum Regeln der Hemmung des Wachstums und/oder Vorhandenseins des unterirdischen Ziel-Degradationsfaktors.

11. Verfahren nach Anspruch 9 oder 10, wobei die Länge der zeitlich beabstandeten Intervalle unregelmäßig geändert wird.

12. Vorrichtung nach einem der Ansprüche 9 bis 11, wobei die Ozonkonzentration kleiner als 0,1 ppm ist.

13. Vorrichtung nach einem der Ansprüche 9 bis 12, wobei die Konzentration des Behandlungsmittels (31) unregelmäßig geändert wird.

14. Vorrichtung nach einem der Ansprüche 9 bis 13, wobei das Ozon wenigstens in einer ausreichenden Konzentration vorhanden ist, um das reproduktive oder kommunikative Verhalten des unterirdischen Ziel-Degradationsfaktors zu beeinflussen, um in wenigstens einem Schwund seiner Population zu resultieren.

## Revendications

1. Appareil destiné à être utilisé pour protéger un bâtiment (10) vis-à-vis d'un endommagement ou d'une dégradation par un facteur de dégradation souterrain (42), comprenant un moyen (12) destiné à créer un champ de pression supérieure à la pression atmosphérique (40) dans une région du sol en dessous du bâtiment ayant des propriétés hostiles au facteur de dégradation souterrain cible en délivrant de l'ozone (31) suivant une concentration au moins suffisante pour affecter le comportement reproducteur ou de communication du facteur de dégradation souterrain cible (42), dans lequel le facteur de dégradation souterrain cible (42) consiste en des termites ou d'autres insectes (42), **caractérisé en ce que** l'ozone (31) est délivré à des intervalles espacés dans le temps sur une période prolongée, et dans lequel la concentration est inférieure à celle à laquelle sa présence pourrait provoquer des effets néfastes sur les humains.

2. Appareil selon la revendication 1, dans lequel le moyen (12) destiné à créer une région avec des propriétés inhospitalières pour le facteur de dégradation souterrain cible (42) comprend ou inclut un moyen destiné à délivrer l'ozone (31) suivant une concentration au moins suffisante pour modifier la chimie de la phéromone desdites termites ou desdits autres insectes.

3. Appareil selon l'une quelconque des revendications précédentes, dans lequel le moyen destiné à créer une région hostile dans le sol en dessous du bâtiment comprend ou inclut un moyen destiné à irradier ladite région avec des ondes ultrasonores.

4. Appareil selon l'une quelconque des revendications précédentes, dans lequel le moyen (12) destiné à créer un champ de pression supérieure à la pression atmosphérique comprend une pompe (12) située dans le bâtiment.

5. Appareil selon la revendication 4, dans lequel ladite pompe (12) est située dans une région habitable (18) du bâtiment (10) et agit pour créer une ventilation forcée (46) de celui-ci.

6. Appareil selon l'une quelconque des revendications précédentes, comprenant en outre un moyen de détection destiné à surveiller la vitesse de migration dudit facteur de dégradation souterrain (42) à mesure qu'il s'approche dudit bâtiment (10) par rapport à la région de sol en dessous du bâtiment.

7. Appareil selon la revendication 6, dans lequel le moyen de détection est capable de communiquer avec ledit moyen (12) destiné à délivrer l'ozone (31) dans la région en dessous du bâtiment (10), pour permettre que l'ozone soit délivré lorsque nécessaire, en réponse à la vitesse de migration dudit facteur de dégradation souterrain (42).

8. Appareil selon l'une quelconque des revendications précédentes, comprenant en outre un moyen destiné à ioniser l'air.

9. Procédé de protection d'un bâtiment (10) vis-à-vis d'un endommagement ou d'une dégradation par un facteur de dégradation souterrain cible (42) tel qu'un insecte, ledit procédé comprenant les étapes consistant à : créer un champ de pression supérieure à la pression atmosphérique (40) dans une région en dessous du bâtiment, et délivrer un agent de traitement (31) à des intervalles espacés dans le temps sur une période prolongée sur ladite région, ledit agent de traitement tendant à empêcher la croissance et/ou la présence dudit facteur de dégradation souterrain cible, dans lequel l'agent de traitement est l'ozone (31) et sa concentration est inférieure à celle à laquelle sa présence pourrait provoquer des effets néfastes sur les humains.

10. Procédé selon la revendication 9, comprenant en outre l'étape consistant à détecter la vitesse de migration/croissance dudit facteur de dégradation souterrain (42) situé en dessous dudit bâtiment (10) et en réponse à l'utilisation de cette information réguler l'inhibition de la croissance et/ou de la présence dudit facteur de dégradation souterrain cible.

11. Procédé selon la revendication 9 ou 10 dans lequel la longueur des intervalles espacés dans le temps est modifiée de manière irrégulière.

12. Procédé selon l'une quelconque des revendications 9 à 11, dans lequel la concentration en ozone est inférieure à 0,1 ppm.

13. Procédé selon l'une quelconque des revendications 9 à 12, dans lequel la concentration de l'agent de traitement (31) est modifiée de manière irrégulière.

14. Procédé selon l'une quelconque des revendications 9 à 13, dans lequel ledit ozone est présent suivant une concentration au moins suffisante pour affecter le comportement reproducteur ou de communication du facteur de dégradation souterrain cible de manière à résulter au moins en la diminution de sa population.
